# NEW EUROPEAN PATENT SPECIFICATION

(11) **EP 0 390 928 B2**
(45) Date of publication and mention of the opposition decision: **10.05.2000**
(45) Mention of the grant of the patent: 10.01.1996
(21) Application number: 89910196.8
(22) Date of filing: 12.09.1989
(51) Int. Cl.: B41M 5/00, B42D 15/02

(54) **IMAGE-RECEIVING MEDIUM**
BILDEMPFANGSMEDIUM
SUPPORT RECEVANT UNE IMAGE

(30) Priority: 12.09.1988 JP 22642888
(43) Date of publication of application: 10.10.1990
(60) Divisional application: 95103783.7
(73) Proprietor: DAI NIPPON INSATSU KABUSHIKI KAISHA, Tokyo 162-01 (JP)
(72) Inventor: OSHIMA, Katsuyuki Dai Nippon Insatsu K.K., Tokyo 162-01 (JP); FUJIMURA, Hideo Dai Nippon Insatsu K.K., Shinjuku-ku 162-01 (JP); ANDO, Jitsuhiko Dai Nippon Insatsu K.K., Tokyo 162-01 (JP)
(74) Representative: Müller-Boré & Partner Patentanwälte
(86) International application number: JP8900930
(87) International publication number: WO9002660

(56) References cited:
- EP-A- 0 232 502
- EP-A- 0 266 430
- EP-A- 0 273 348
- EP-S- 0 253 338
- DE-A- 2 263 436
- DE-C- 3 151 407
- JP-A- 62 142 692
- JP-B- 6 141 438
- US-A- 4 133 926
- US-A- 4 402 887
- DATABASE WPIL,n 83-818482,Derwent Publications&& JP-B-58047162(ACHILLES KK) 20-10-1983
- Kunststoff-Lexikon, Carl Hanser Verlag München Wien 1981,page 233, "Hart-PVC"
- Kunststoff-Taschenbuch, Carl Hanser Verlag München Wien 1979, page 254, "Hart-PVC"

## Description

This invention relates to a recording material, more particularly to an image receiving medium made of a polyvinyl chloride which can form easily and sharply a complicated image such as picture of face, etc. to be formed on ID card according to the heat transfer system.

In the prior art, many cards such as identification certificates, driving licenses, membership cards, etc. have been used, and on these cards are recorded various informations for clarifying identification, etc. of the owner. Particularly, in ID card, etc., face photograph is the most important.

A classical method for imparting face photograph to various cards is a method to plater a face photograph to a predetermined portion of a card substrate by use of an adhesive, but this method is very cumbersome in its operation, and also has the drawback that unevenness is created on the card surface to lose flatness.

Whereas, in the prior art, there has been developed an image forming method according to the sublimation transfer method. The sublimation transfer method is a method in which a sublimation transfer sheet having a layer containing a dye which is sublimation transferred by heat on the surface of a substrate film and an image receiving sheet are superposed, and a desired image is formed on the image receiving sheet by heating with a thermal head according to an image information from the back of the sublimation transfer sheet, and there is the advantage that it can be practiced by a simple heat transfer printer.

Whereas, when the sublimation transfer system is applied to a card medium such as ID card, the card substrate is demanded to have sufficient dyeability for a sublimable dye. However, most of the card substrates of the prior art have no sufficient dyeability for sublimable dyes, and therefore no image formation can be effected thereon as such. As the method for solving such drawback, a method of previously forming an image receiving layer excellent in dyeability for a sublimable dye may be conceivable, but formation of such image receiving layer on a card substrate is cumbersome in steps, whereby there is the problem of increasing the production cost of the card substrate. Further, when an image receiving layer is provided separately on the surface of a card substrate, there will ensue such problems that the card substrate may be curled or the image receiving layer may be peeled off as caused by the heat applied during image formation.

JP-A-62-142692 describes a card such as ID card comprising a card substrate, a transparent film having information and a transparent protective film laminated on the transparent film.

JP-B-61-41438 describes an information recording card having a substrate layer, an ink absorbing layer and a lubricious layer, whereby the picture is transferred from a transfer ribbon provided with an ink layer by thermal pressure bonding.

The present invention has been accomplished in view of the problems of the prior art as described above, and its object is to provide an image receiving medium which is not required to provide separately an image receiving layer on a card substrate, can effect image formation of face photograph according to the heat transfer system sharply and quickly, and yet generates no curl tend to be caused by heat transfer.

For accomplishing the object as mentioned above, the image receiving medium is an image receiving medium to be used in combination with a heat transfer sheet, characterized in that the image receiving medium comprises one polyvinyl chloride resin sheet or a laminate of a plurality of polyvinyl chloride resin sheets, and at least a layer of said image receiving medium superposed on said heat transfer sheet which receives the dye from the heat transfer sheet comprises a polyvinyl chloride resin composition containing 0.1 to 10 parts by weight of a plasticizer based on 100 parts by weight of the polyvinyl chloride resin.

The image receiving medium of the present invention uses a polyvinyl chloride vinyl resin as the main agent, and yet a plasticizer is incorporated in the main agent and its amount contained is made to be controlled strictly, and therefore an image receiving medium excellent in both image forming characteristic and image quality is obtained also without requiring separate formation of an image receiving layer.

Particularly, in the present invention, by making the structure of the image receiving medium a symmetrical laminate structure of three layers, the problem of curl which is liable to be generated in the heat transfer system can be effectively prevented.

Further, in the present invention, by controlling strictly the softening temperature of the image receiving surface of the image receiving medium within a specific range, further improvement of printing characteristic can be effected.

Still further, in the image receiving medium of the present invention, the image quality can be made further excellent by containing no pigment in the image receiving surface of the image receiving medium at all, thus having a specific feature also in this point.

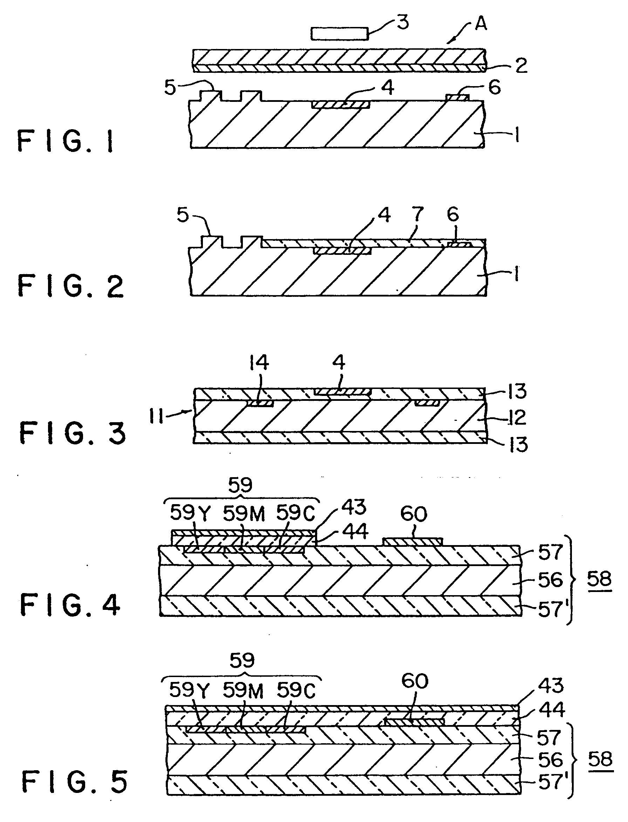

FIG. 1, FIG. 2, FIG. 3, FIG. 4 AND FIG. 5 are respectively sectional views showing the constitution of the image receiving medium according to Examples of the present invention.

In the following, the present invention is described in more detail by referring to preferred embodiments.

The polyvinyl chloride resin to be used in the present invention may be known per se.

In the present invention, in forming an image receiving medium from polyvinyl chloride, at least as the layer constituting the image receiving layer, an image receiving medium is molded by using one including 0.1 to 10 parts by weight of a plasticizer per 100 parts by weight of polyvinyl chloride. By this, the image receiving medium exhibits sufficiently good dyeability of a sublimable dye.

As the plasticizer to be used in the present invention, phthalate plasticizers, phosphate plasticizers, aliphatic dibasic acid ester plasticizers, epoxy plasticizers, polyester plasticizers, chlorinated paraffins, etc. can be used. Specifically, plasticizers known in the prior art can be preferably used, including dibutyl phthalate, di-n-octyl phthalate, di-(2-ethylhexyl) phthalate, dinonyl phthalate, dilauryl phthalate, butyl lauryl phthalate, butyl benzyl phthalate, di-(2-ethylhexyl) adipate, di-(2-ethylhexyl) sebacate, tricresyl phosphate, tri-(2-ethylhexyl) phosphate, triethylene glycol ester, tetraethylene glycol ester, epoxy fatty acid ester, etc.

The amount of these plasticizers used may be 0.1 to 10 parts by weight per 100 parts by weight of the above-mentioned polyvinyl chloride, and a particularly preferable range is from 3 to 5 parts by weight. It is necessary to control strictly the amount of the plasticizer used, and with an amount less than 0.1 part by weight, dyeability onto a sublimable dye is insufficient, while if it exceeds 10 parts by weight, the card material lacks rigidity to become soft, whereby the dye layer of the sublimation type heat transfer sheet may be used during heat transfer to make the card substrate and the heat transfer sheet unpeelable, or abnormal transfer such as peel-off of the dye layer from the heat transfer may occur. Also, blurring occurs on the printed image during sublimation transfer to give no sharp image undesirably.

Also, in the preferred embodiment of the present invention, when 0.1 to 5 parts by weight of a lubricant per 100 parts by weight of polyvinyl chloride are included in addition to the above-described plasticizer, no bad influence will appear even if the plasticizer may be included in polyvinyl chloride in a relatively larger amount, for example, at a ratio of 5 to 10 parts by weight, but on the contrary it has been confirmed that printing characteristics are improved. More specifically, the present inventor has found that blocking of the transfer sheet during transfer is prevented, and yet dyeability with the sublimable dye of the image receiving medium obtained is further improved by such complex addition.

As such lubricant, all of the lubricants known in the art such as fatty acids, fatty acid amides, waxes, paraffins, etc. can be used. If the amount of these lubricants used is too small, there is no advantage by addition, while if it is too much, the surface roughening of the image receiving medium obtained will undesirably occur. Also, by use of these lubricants, not only dyeability of a sublimable dye can be improved, but also adhesion between the heat transfer sheet and the image receiving medium is little even by use of a relatively higher temperature during sublimation transfer, whereby an image of higher density can be formed efficiently.

The main components constituting the image receiving medium have been described above, but of course in the present invention, colored pigments, white pigments, extender pigments, fillers, UV-absorbers, antistatic agents, heat stabilizers, antioxidants, fluorescent brighteners, etc. can also be used additionally.

The image receiving medium of the present invention is obtained by blending the necessary components as described above, and molding the blended product by the formation method known in the art such as the calendering method, the extrusion method, etc. into a sheet with a thickness of, for example, about 0.05 to 1 mm, and the present invention is inclusive of both the sheet before cut into the so called card size and those cut into the card size.

Fig. 1 and Fig. 2 are sectional views of the basic mode of the image receiving medium of the present invention, and this is shaped in a sheet with a thickness of about 0.1 to 1 mm. By superposing a known sublimation type heat transfer sheet A with the dye layer 2 opposed onto the surface of the image receiving member 1 and heating with a thermal head 3 from the back of the sublimation transfer sheet A, a desired image 4 is formed on the surface of the image receiving medium 1. Of course, such image receiving medium 1 may also have an embossed pattern 5 or another printing pattern 6 previously formed thereon, and also, these emboss 5 and printing pattern 6 may be provided after sublimation transfer, and further a transparent protective layer 7 may be formed on the whole surface or a part of its surface for improvement of durability of these images.

An example shown in Fig. 3 shows a sectional view of the image receiving medium of another preferred embodiment of the present invention. The image receiving medium 11 of this example has oversheets (transparent polyvinyl chloride layers) 13 laminated on both surfaces of a center core 12 containing a white pigment (for example, a white rigid polyvinyl chloride resin having a thickness of 0.1 to 0.8 mm, etc.). At least one of the oversheets 13 contains a specific amount of a plasticizer (and a lubricant) as described above. In this example, the center core 12 is not necessarily required to contain a predetermined amount of plasticizer, and the oversheets 13 on its surfaces have sufficient dyeability similarly as described above. In this example, on the surfaces of the center core 12, various printed patterns 14 can be previously formed.

As described above, formation of the structure into a symmetrical laminate structure of three layers is very effective in preventing effectively the problem of curl which is liable to be generated during heat transfer in the prior art. Also, by forming the dye receiving surface of a transparent polyvinyl chloride resin, the depth, the cubic feeling of image are good, and further since the dye receiving layer contains no pigment, luster is good and also coarseness on the printed surface is little.

Further, the image receiving medium of the present invention can also have other recordings, such as magnetic recording layer, writing layer, IC memory, bar code, etc. previously provided on its surface.

Also, in the present invention, by restricting the softening temperature (according to the standard defined in JIS-K-6734) of the above-mentioned polyvinyl chloride composition constituting the image receiving medium strictly within the range of from 50 to 70°C, printing characteristics, particularly operability, dye dyeability and blurring prevention of image in heat transfer by use of a thermal head can be improved, and further one with good emboss characteristics (formation characteristic of embossed letters) can be obtained.

In this case, at a softening temperature lower than 50°C, abnormal transfer frequently occurs, and also blurring of image after printing is increased, while if the softening temperature exceeds 70°C, dye dyeability will be lowered undesirably markedly. Besides, if the softening temperature exceeds 70°C, it becomes difficult to form good embossed letters, and fine cracks may be formed at the embossed portion unsuitably.

The image receiving medium in the present invention may also contain an antistatic agent, or an antistatic agent may be also coated on the surface. As the antistatic agent, there can be employed cationic surfactants (e.g. quaternary ammonium salts, polyamine derivatives, etc.), anionic surfactants (e.g. alkylphosphates, etc.), amphoteric surfactants (e.g. those of the betaine type, etc.) or nonionic surfactants (e.g. fatty acid esters, etc.), and further those of the polysiloxane type. By coating or incorporating these antistatic agents, conveying troubles by static charges during printing of the dye receiving member in sheet can be cancelled, and also when the dye receiving medium has a magnetic recording layer or an IC memory, electrostatic breaking of memory contents can be prevented. A preferable range of surface resistance value from such point of views may be 10⁸ to 10¹² Ω/cm². For imparting IC memory, optical memory, known techniques, such as those described in Japanese Laid-Open Patent Application No. 61-103287 can be applied.

### Image formation

Generally speaking, heat transfer sheets may be classified broadly into heat transfer sheets of the so called melt ink transfer type of which heat transfer layers are melted or softened by heating to be heat transferred imagewise onto a heat transferable material, and heat transfer sheets of the so called sublimation dye transfer type of which the dyes in the heat transfer layer are sublimated (heat migrated) by heating to have only the dyes heat transferred onto a heat transferable material.

When ID cards such as identification certificate, etc. are to be prepared with such heat transfer sheets as described above, in the case of heat transfer sheets of the melt ink transfer type, formation of monotonous images such as letters, figures, etc. can be easily done, but there is the problem that formation of gradation image such as face photograph can be done with difficulty. On the contrary, in the case of heat transfer sheets of the sublimation transfer type, although gradation image of face photograph, etc. is excellent, images such as letters, symbols, etc. are deficient in density and sharpness, and no OCR letter, bar code, etc. readable with IR-ray can be formed. Thus, none of the sheets can form satisfactory images.

As the method for solving such drawbacks, the method which employs printing with the above-mentioned fusion type (melt type) transfer and printing with the sublimation type transfer sheet in combination is preferred.

The ink for formation of heat meltable ink layer to be used in the above method comprises a colorant and a vehicle, and may further contain various additives added therein, if desired.

As the colorant as mentioned above, of organic or inorganic pigments or dyes, those having good characteristics as the recording material, for example, having sufficient coloration density without discoloration or fading by light, heat, temperature, etc. are preferred. As the colorant, cyan, magenta, yellow, etc. may be also used, but for the purpose of the present invention, colorants of black which can print clear letters and symbols at high density are preferred.

As the vehicle, one comprising a wax as the main component, and otherwise mixtures of a wax with drying fat, resin, mineral oil, derivatives of cellulose and rubber, etc. may be employed.

Representative examples of wax may include microcrystalline wax, carunauba wax, paraffin wax, etc. Further, there may be employed various waxes such as Fischer-Tropsch wax, various low molecular weight polyethylenes, wood wax, beeswax, whale wax, insect wax, wool wax, shellac wax, canderilla wax, petrolatum, partially modified wax, fatty acid ester, fatty acid amide, etc. However, from the standpoint of adhesion to vinyl chloride resin, scratch resistance, the black ink should more preferably use a resin binder as shown below:
(1) Acrylic resin,
(2) Acrylic resin + Chlorinated rubber,
(3) Acrylic resin + Vinyl chloride/Vinyl acetate copolymer resin,
(4) Acrylic resin + Cellulose type resin,
(5) Vinyl chloride/vinyl acetate copolymer resin.

As the method for forming a heat meltable ink layer on a substrate film or a release layer previously provided thereon, there may be included, in addition to hot melt coating, the methods of coating the above ink according to many means such as hot lacker coating, gravure coating, gravure reverse coating, roll coating and others. The thickness of the ink layer formed should be determined so that the necessary density and the heat sensitivity can be matched and, for example, the thickness of the ink layer should be generally preferably within the range of from about 0.2 to 10 µm.

Prior to formation of the heat meltable ink layer as mentioned above, it is preferable to form a release layer on the surface of the substrate for making peeling of the heat meltable ink layer easier. Such release layer is formed of a peeling agent such as waxes, silicone waxes, silicone resin, fluorine resins, acrylic resins, cellulose resins, vinyl chloride/vinyl acetate copolymer resins, nitrocellulose resins, etc. The formation method may be the same as the formation method of the above-described sublimable dye layer and the heat meltable ink layer, and its thickness may be sufficiently about 0.1 to 5 µm. When matte printing or matte protective after transfer is desirable, various particles can be included in the release layer to make the surface matte.

Next, the sublimation type heat transfer sheet is to be described.

First, as the substrate film of the heat transfer sheet, the same substrate films which have been used in the heat transfer sheet of the prior art can be used as such, and also other films can be used, and are not particularly limited.

As specific examples of preferable substrates, for example, thin papers such as glassine paper, condenser paper, paraffin paper, etc. are useful, and otherwise there may be included plastics such as polyester, polypropylene, Cellophane, polycarbonate, cellulose acetate, polyethylene, polyvinyl chloride, polystyrene, nylon, polyimide, polyvinylidene chloride, ionomer, etc. or substrate films comprising composite materials of these with the above-mentioned papers.

The thickness of such substrate film can be suitably varied so that its strength and heat resistance, etc. may become adequate, but its thickness should be preferably 3 to 100 µm.

The dye layer of the heat transfer sheet is a layer having a sublimable dye carried on the substrate film as described above with any desired binder.

As the dye to be used, all of the dyes used for heat transfer films of the sublimation type known in the prior art are effectively available, and not particularly limited. For example, as some preferable dyes, there may be included, as red dyes, MS Red G, Macrolex Red Violet R, Ceres Red 7B, Samaron Red HBSL, SK Rubin SEGL, etc., also as yellow dyes, Phorone Brilliant Yellow, S-6GL, PTY-52, Macrolex Yellow S-6G, etc., and also as blue dyes, Kayaset Blue 714, Waxsoline Blue AP-FW, Phorone Brilliant Blue S-R, MS Blue 100, Dito Blue No. 1, etc.

As the binder for carrying the dye as mentioned above, all of those known in the prior art can be used, and preferable examples may include cellulose type resins such as ethyl cellulose, hydroxyl cellulose, ethylhydroxy cellulose, hydroxypropyl cellulose, methyl cellulose, cellulose acetate, cellulose acetate butyrate, etc.; vinyl resins such as polyvinyl alcohol, polyvinyl acetate, polyvinyl butyral, polyvinyl acetal, polyvinyl pyrrolidone, polyacrylamide, etc., but particularly polyvinyl acetal and polyvinyl butyral, etc. are preferable from such points as heat resistance, heat migratability of dye, etc.

The dye layer is formed basically of the materials as described above, but otherwise various additives known in the prior art can be also included, if necessary.

Such dye layer is formed preferably by preparing an ink for dye layer formation by dissolving or dispersing the respective components of the above-mentioned dye, binder resin and other optional components into an appropriate solvent, and printing and drying the ink on the above-mentioned substrate film according to the gravure printing method, etc. Of course, although monochromatic printing may be employed in carrying out such printing, for the purpose of the present invention, a multi-color printing of three colors of yellow, magenta and cyan or four colors with addition of black is preferable so that a color image can be formed.

The image receiving medium may be provided with emboss, sign, IC memory, optical memory, magnetic recording layer, other printings, etc., and it is also possible to provide emboss, sign, magnetic recording layer, etc. after the protective layer transfer. Also, by use of the card substrate of the present invention, emboss can be also applied on the face photograph after image formation, which is very effective for preventing alteration of the card.

A preparation example of the transfer printed matter by use of the dye image receiving member, and the protective layer transfer sheet of the present invention as described above is described by referring to Fig. 4, Fig. 5.

First, an image receiving medium 58 in the form of a card was prepared, having transparent vinyl chloride resins 57, 57' containing a plasticizer and a lubricant, but containing no colored pigment laminated on both surfaces of a center core 56 comprising a vinyl chloride resin comprising a white pigment. On the surface of the image receiving medium, a yellow dye layer for sublimation type heat transfer sheet was superposed, and a yellow image 59Y was transferred with a thermal printer which actuates following color separation signal. By transferring similarly the magenta image 59M and the cyan image 59C onto the same region, a desired color image 59 is formed. Next, by use of a melt ink type heat transfer sheet, desired letters, symbols, bar codes, etc. 60 are similarly printed. Further, by use of the protective layer transfer sheet as described above, the release protective layer and the heat seal layer on the above-mentioned color image 59 and/or the image 60 such as letters, etc. to form a protective layer. Thus, a card having formed desired information, images formed thereon can be formed.

In carrying out the transfer as described above, the thermal printers may be separately set for sublimation transfer, for melt ink transfer, for protective layer transfer sheet (preferably continuously), or alternatively, these transfers may be effected by adequate control of the respective printing energies with the common printer. In the present invention, the means for heating the protective layer transfer sheet is not limited to a thermal printer, but otherwise hot plates, hot rolls, iron, etc. may be also employed.

In the following, examples of the present invention are described in more detail by referring to Examples and Comparative Examples. In the sentences, parts and % are based on weight, unless otherwise particularly noted.

### Examples 1 to 7 and Comparative Examples 1 to 3

According to the compositions shown below in Table 1, dye receiving sheets (white card substrates) (thickness 0.2 mm, size 10 × 20 cm) of the present invention and Comparative Examples were prepared.

**TABLE 1**

| | Components | | | |
|---|---|---|---|---|
| | PVC | Pigment | Plasticizer | Lubricant |
| Example 1 | 100 | 10 | 0.5 | 0.0 |
| Example 2 | 100 | 10 | 1 | 0.0 |
| Example 3 | 100 | 10 | 3 | 0.5 |
| Example 4 | 100 | 10 | 5 | 1 |
| Example 5 | 100 | 10 | 10 | 0.0 |
| Example 6 | 100 | 10 | 10 | 3 |
| Example 7 | 100 | 10 | 10 | 5 |
| Comparative Example 1 | 100 | 10 | 0.0 | 0.0 |
| Comparative Example 2 | 100 | 10 | 15 | 0.0 |
| Comparative Example 3 | 100 | 10 | 20 | 0.0 |
| PVC: polyvinyl chloride compound (polymerization degree 800) containing about 10% of an additive such as stabilizer, etc.; Pigment: titanium oxide; Plasticizer: DOP (dioctyl phthalate); Lubricant: stearic acid amide. | | | | |

Next, inks of three colors containing sublimable dyes of three colors having the compositions shown below respectively were prepared.

### Yellow ink:

| | |
|---|---|
| Disperse dye (Macrolex Yellow 6G, Bayer, C.I. Disperse Yellow 201) | 5.5 parts |
| Polyvinyl butyral resin (Ethlec BX-1, Sekisui Kagaku K.K., Japan) | 4.5 parts |
| Methyl ethyl ketone/toluene (weight ratio 1/1) | 89.0 parts |

### Magenta ink:

The same as yellow ink except for using a magenta disperse dye (C.I. Disperse Red 60) as the dye.

### Cyan ink:

The same as yellow ink except for using a cyan disperse dye (C.I. Solvent Blue 63) as the dye.

The above ink compositions were coated repeatedly according to the gravure coating method on the surface of a polyester film with a thickness of 4.5 µm having a heat-resistant slip layer (thickness 1 µm) formed on the back, and an adhesion improving layer (thickness 0.5 µm) on the surface in plane succession in the order of yellow, magenta and cyan respectively at a width of 15 cm and dried to a coated amount of about 3 g/m², to form a heat transfer sheet containing sublimable dye layers of three colors.

With the above sublimation type heat transfer sheet superposed on the surface of the card substrate as previously described, heat energy was imparted with a thermal head connected to the electrical signals obtained by color separation of a face photograph to effect sublimation transfer in the order of cyan, magenta and yellow, thereby forming a face photograph of full-color.

Next, on the surface of the same polyester film as described above, an ink for release layer having the composition shown below was coated according to the gravure coating method and dried at a ratio of 1 g/m² to form a release layer.

### Ink for release layer

| | |
|---|---|
| Acrylic resin | 20 parts |
| Methyl ethyl ketone | 100 parts |
| Toluene | 100 parts |

Next, on the surface of the above release layer was coated the ink shown below to a coated amount of about 3 g/m² and dried to form a heat meltable ink layer to prepare a heat melt type heat transfer sheet.

### Heat meltable ink

| | |
|---|---|
| Acryl/vinyl chloride/vinyl acetate copolymer resin | 20 parts |
| Carbon black | 10 parts |
| Toluene | 35 parts |
| Methyl ethyl ketone | 35 parts |

On the image blank portion of the card having the above-mentioned face photograph formed thereon, the melt ink type heat transfer sheet as described above was superposed, and letters such as figures, Chinese characters, etc. and signal images such as bar code, etc. were formed.

The color formed density, sharpness of the face photograph and abnormal transfer state of the heat transfer sheets during sublimation transfer of the cards of the present invention and Comparative Examples were examined to obtain the results shown below in Table 2.

**TABLE 2**

| | Performance | | |
|---|---|---|---|
| | Color formed density | Sharpness | Abnormal transfer resistance |
| Example 1 | ○ | ○ | ○ |
| Example 2 | ○ | ○ | ⓞ |
| Example 3 | ⓞ | ⓞ | ⓞ |
| Example 4 | ⓞ | ⓞ | ⓞ |
| Example 5 | ⓞ | ⓞ | ○ |
| Example 6 | ⓞ | ⓞ | ⓞ |
| Example 7 | ⓞ | ⓞ | ⓞ |
| Comparative Example 1 | X | X*¹ | X |
| Comparative Example 2 | ⓞ | X*² | ⓞ |
| Comparative Example 3 | ⓞ | X*² | ⓞ |

| | | | |
|---|---|---|---|
| *1: dye layer of heat transfer sheet transferred partially as such, and resolution remarkably bad | | | |
| *2: blurring occurred on image, and resolution bad | | | |

The color formed density was compared with naked eyes, with the highest density being represented by ⓞ, moderate one by ○ and inferior one by X.

Sharpness was compared with naked eyes, and the sharpest one was represented by ⓞ, moderate one by ○ and inferior one by X.

Abnormal transfer resistance is represented by ⓞ when peeling of the transfer sheet after sublimation transfer is easy, by ○ when slightly difficult, and X when peeling is difficult and the dye layer itself is transferred onto the card substrate.

### Examples 8 to 14 and Comparative Examples 4 to 6

A white card substrate core (thickness 0.2 mm, size 30 × 30 cm) was prepared according to the composition shown below.

| | |
|---|---|
| Polyvinyl chloride (polymerization degree 800) compound containing about 10% of additives such as stabilizer, etc. | 100 parts |
| White pigment (titanium oxide) | 15 parts |

Next, transparent sheets were prepared according to the compositions shown below in Table 3 (thickness 0.15 mm), and thermally pressure adhered onto the both surfaces of the above white core to prepare card substrates of Examples and Comparative Examples.

**TABLE 3**

| | Components | | | |
|---|---|---|---|---|
| | PVC | Pigment | Plasticizer | Lubricant |
| Example 8 | 100 | --- | 0.5 | 0.0 |
| Example 9 | 100 | --- | 1 | 0.0 |
| Example 10 | 100 | --- | 3 | 0.5 |
| Example 11 | 100 | --- | 5 | 1 |
| Example 12 | 100 | --- | 10 | 0.0 |
| Example 13 | 100 | --- | 10 | 3 |
| Example 14 | 100 | --- | 10 | 5 |
| Comparative Example 4 | 100 | --- | 0.0 | 0.0 |
| Comparative Example 5 | 100 | --- | 15 | 0.0 |
| Comparative Example 6 | 100 | --- | 20 | 0.0 |

When gradation images and monotonous images were formed on the surface of the above card substrates in the same manner as in Example 1 and the same performances were examined, the same results as in Table 2 were obtained.

### Examples 15 to 19 and Reference Examples 1, 2

For examination of the influence of the softening temperature (according to the standard defined in JIS-K-6734) of the above polyvinyl chloride resin compositions constituting the image receiving media, the following tests were conducted.

First, on both surfaces of a center core with a thickness of 670 µm comprising a vinyl chloride resin containing a white pigment were laminated oversheets (thickness 70 - 150 µm) comprising transparent vinyl chloride resin compositions shown below, to form image receiving media. In this case, oversheets exhibiting those shown below in Table 4 as the softening temperature of the oversheet were prepared. The softening temperature was controlled by controlling suitably the kinds and amounts of plasticizers, lubricants, the molecular weights of PVC and copolymerization with other resins, etc.
Example 15: "Vinifoil C-1436" (product of Mitsubishi Jushi, K.K., Japan)
Example 16: "Vinifoil C-0436" (product of Mitsubishi Jushi, K.K., Japan)
Example 17: "Vinifoil C-0446" (product of Mitsubishi Jushi, K.K., Japan)
Example 19: "Vinifoil C-4020" (product of Mitsubishi Jushi, K.K., Japan)
Reference Example 1: "Vinifoil C-850" (product of Mitsubishi Jushi, K.K., Japan)
Reference Example 2: "Hisilex 502" (product of Mitsubishi Jushi, K.K., Japan)

For these sample media, presence of abnormal transfer, dye dyeability, blurring of image after printing, and emboss adaptability were tested. The results are shown below in Table 4.

**TABLE 4**

| | Example 15 | Example 16 | Example 17 | Example 19 | Reference Example 1 | Reference Example 2 |
|---|---|---|---|---|---|---|
| Softening temperature °C | 66 | 65 | 62 | 57 | 85 | 45 |
| Abnormal transfer | Virtually none | Virtually none | Virtually none | none | occurred | none |
| Dye dyeability | Common | Common | Good | Good | No good | Good |
| Blurring of image after printing | none | none | none | none | Entirely none | Generated |
| Emboss adaptability | Good | Good | Good | Good | Unsuitable | Good |

The image receiving medium of the present invention has excellent characteristics particularly as an image receiving medium in the form of a card, and can be used widely as various information cards such as identification certificate, driving license, membership card, etc.

## Claims

1. An image receiving medium to be used in combination with a heat transfer sheet, characterized in that the image receiving medium comprises one polyvinylchloride resin sheet or a laminate of a plurality of polyvinylchloride resin sheets, and at least a layer of said image receiving medium superposed on said heat transfer sheet which receives the dye from the heat transfer sheet comprises a polyvinyl chloride resin composition containing 0.1 to 10 parts by weight of a plasticizer based on 100 parts by weight of the polyvinyl chloride resin.

2. An image receiving medium according to claim 1, wherein the layer superposed on said heat transfer sheet which receives the dye from the heat transfer sheet further contains 0.1 to 5 parts by weight of a lubricant based on 100 parts by weight of the polyvinyl chloride resin.

3. An image receiving medium according to claim 1 or 2, wherein the layer superposed on said heat transfer sheet which receives the dye from the heat transfer sheet comprises a layer containing no pigment.

4. An image receiving medium according to any one of claims 1 to 3, wherein said image receiving medium comprises a laminate of a three-layer structure having oversheets comprising a polyvinyl chloride composition laminated on both sides of a center core comprising a rigid polyvinyl chloride resin.

5. An image receiving medium according to any one of claims 1 to 4, wherein the softening temperature of said polyvinyl chloride resin composition is within the range of from 50 to 70°C (according to the standard of JIS-K-6734).

6. An image receiving medium according to claim 4, having a printing information between said center core and oversheet.

7. An image receiving medium according to claim 4, wherein said center core comprises a white rigid polyvinyl chloride resin, and said oversheet comprises a substantially transparent vinyl chloride resin composition.

8. A heat transfer image forming method which is a method for recording an image on an image receiving medium by combining a heat transfer sheet with an image receiving medium, characterized in that recording is carried out by combination of a complex manner of sublimation transfer with a sublimation type heat transfer sheet and fusion ink transfer with a fusion type heat transfer sheet with an image receiving medium, which comprises one polyvinyl chloride resin sheet or a laminate of a plurality of polyvinyl chloride resin sheets, and of which at least a layer of said image receiving medium superposed on said heat transfer sheet which receives the dye from the heat transfer sheet comprises a polyvinyl chloride resin composition containing 0.1 to 10 parts by weight of a plasticizer based on 100 parts by weight of the polyvinyl chloride resin.

9. A heat transfer image forming method according to claim 8, which forms gradation images of yellow, magenta and cyan by sublimation transfer with said sublimation type heat transfer sheet, and forms a monotonous image of black by fusion ink transfer with said fusion type heat transfer sheet.

10. A heat transfer printed matter obtainable by recording an image on an image receiving medium by combining a heat transfer sheet with an image receiving medium, characterized in that said image comprises a combination of an image obtainable by use of a sublimation type heat transfer sheet and an image obtainable by use of a fusion type heat transfer sheet, said image receiving medium comprising one polyvinyl chloride resin sheet or a laminate of a plurality of polyvinyl chloride resin sheets, and at least a layer of said image receiving medium superposed on said heat transfer sheet which receives the dye from the heat transfer sheet comprises a polyvinyl chloride resin composition containing 0.1 to 10 parts by weight of a plasticizer based on 100 parts by weight of the polyvinyl chloride resin.

11. A heat transfer printed matter according to claim 10, wherein a protective layer is further laminated on the printed image surface after performing image formation.

12. A heat transfer printed matter according to claim 11, wherein said protective layer comprises a heat seal layer comprising a resin fusible onto said printed image surface by melting or softening with heat, and a releasable protective layer formed on the heat seal layer surface.

13. A heat transfer printed matter according to claim 12, wherein fine particles of a lubricant and/or a substantially transparent organic or inorganic substance are further contained in said releasable protective layer.

14. A heat transfer printed matter according to claim 12, wherein said heat seal layer comprises at least one selected from the group consisting of vinyl chloride·vinyl acetate copolymers, acryl·vinyl chloride·vinyl acetate copolymers, acrylic resins and polyamide resins.

15. A heat transfer printed matter according to claim 12, wherein said releasable protective layer comprises at least one selected from the group consisting of acrylic resins, modfied cellulose resins, silicone resins and fluorine resins.

16. An image receiving medium according to any one of claims 1 to 7, wherein the image receiving medium is in a card form.

17. A heat transfer printed matter according to any one of claims 10 to 15, wherein the image receiving medium is in a card form.

18. An image receiving medium according to any one of claims 1 to 7, wherein the image receiving medium has a surface resistance value of 10⁸ to 10¹² Ω/cm².

## Patentansprüche

1. Bildempfangsmedium zur Verwendung in Kombination mit einem Wärmeübertragungsblatt, dadurch gekennzeichnet, daß das Bildempfangsmedium ein Polyvinylchloridharzblatt oder ein Laminat einer Vielzahl von Polyvinylchloridharzblättern umfaßt, und mindestens eine Schicht des über dem Wärmeübertragunsblatt angeordneten Bildempfangsmediums, welche die Farbe von dem Wärmeübertragungsblatt empfängt, eine Polyvinylchloridharzzusammensetzung umfaßt, die 0,1 bis 10 Gewichtsteile, bezogen auf 100 Gewichtsteile des Polyvinylchloridharzes, eines Weichmachers enthält.

2. Bildempfangsmedium nach Anspruch 1, wobei die über dem Wärmeübertragungsblatt angeordnete Schicht, welche die Farbe von dem Wärmeübertragungsblatt empfängt, ferner 0,1 bis 5 Gewichtsteile, bezogen auf 100 Gewichtsteile des Polyvinylchloridharzes, eines Schmiermittels enthält.

3. Bildempfangsmedium nach Anspruch 1 oder 2, wobei die über dem Wärmeübertragungsblatt angeordnete Schicht, welche die Farbe von dem Wärmeübertragungsblatt empfängt, eine Schicht umfaßt, die kein Pigment enthält.

4. Bildempfangsmedium nach einem der Ansprüche 1 bis 3, wobei das Bildempfangsmedium ein Laminat einer dreischichtigen, Oberblätter aufweisenden Struktur umfaßt, welches eine Polyvinylchloridzusammensetzung aufweist, die auf beide Seiten eines Mittelkerns, welcher ein starres Polyvinylchloridharz umfaßt, laminiert ist.

5. Bildempfangsmedium nach einem der Ansprüche 1 bis 4, wobei die Erweichungstemperatur der Polyvinylchloridharzzusammensetzung im Bereich von 50° bis 70°C (gemäß dem Standard von JIS-K-6734) liegt.

6. Bildempfangsmedium nach Anspruch 4, welche eine Druckinformation zwischen dem Mittelkern und dem Oberblatt aufweist.

7. Bildempfangsmedium nach Anspruch 4, wobei der Mittelkern ein weißes starres Polyvinylchloridharz umfaßt, und das Oberblatt eine im wesentlichen transparente Vinylchloridharzzusammensetzung umfaßt.

8. Verfahren zur Bildung eines Wärmeübertragungsbilds, welches ein Verfahren zur Aufzeichnung eines Bilds auf einem Bildempfangsmedium durch Kombination eines Wärmeübertragungsblatts mit einem Bildempfangsmedium ist, dadurch gekennzeichnet, daß die Aufzeichnung durchgeführt wird durch Kombination auf komplexe Art und Weise einer Sublimationsübertragung mit einem Wärmeübertragungsblatt vom Sublimationstyp und einer Schmelztintenübertragung mit einem Wärmeübertragungsblatt vom Schmelztyp mit einem Bildempfangsmedium, welches ein Polyvinylchloridharzblatt oder ein Laminat einer Vielzahl von Polyvinylchloridharzblättern umfaßt, und wovon mindestens eine Schicht des über dem Wärmeübertragungsblatt angeordneten Bildempfangsmediums, welche die Farbe von dem Wärmeübertragunsblatt empfängt, eine Polyvinylchloridharzzusammensetzung umfaßt, die 0,1 bis 10 Gewichtsteile, bezogen auf 100 Gewichtsteile des Polyvinylchloridharzes, eines Weichmachers enthält.

9. Verfahren zur Bildung eines Wärmeübertragungsbilds nach Anspruch 8, welches Abstufungsbilder von Gelb, Magenta und Cyaninblau durch Sublimationsübertragung mit dem Wärmeübertragungsblatt vom Sublimationstyp bildet, und ein monotones Bild von Schwarz durch Schmelztintenübertragung mit dem Wärmeübertragungsblatt vom Schmelztintentyp bildet.

10. Wärmeübertragene Drucksache, erhältlich durch Aufzeichnung eines Bilds auf einem Bildempfangsmedium durch Kombinieren eines Wärmeübertragungsblatts mit einem Bildempfangsmedium, dadurch gekennzeichnet, daß das Bild eine Kombination eines Bilds, das durch Verwendung eines Wärmeübertragungsblatts vom Sublimationstyp erhältlich ist und eines Bilds, das durch Verwendung eines Wärmeübertragungsblatts vom Schmelztyp erhältlich ist, umfaßt, wobei das Bildempfangsmedium ein Polyvinylchloridharzblatt oder ein Laminat einer Vielzahl von Polyvinylchloridharzblättern umfaßt, und mindestens eine Schicht des über dem Wärmeübertragungsblatt angeordneten Bildempfangsmediums, welche die Farbe von dem Wärmeübertragungsblatt empfängt, eine Polyvinylchloridharzzusammensetzung umfaßt, die 0,1 bis 10 Gewichtsteile, bezogen auf 100 Gewichtsteile des Polyvinylchloridharzes, eines Weichmachers enthält.

11. Wärmeübertragene Drucksache nach Anspruch 10, wobei ferner eine Schutzschicht auf die gedruckte Bildoberfläche nach der ausgeführten Bildgestaltung laminiert ist.

12. Wärmeübertragene Drucksache nach Anspruch 11, wobei die Schutzschicht eine Wärmeversiegelungsschicht umfaßt, welche ein Harz umfaßt, welches auf die gedruckte Bildoberfläche durch Schmelzen oder Erweichen durch Wärme schmelzbar ist, und eine auf der Oberfläche der Wärmeversiegelungschicht gebildete abtrennbare Schutzschicht.

13. Wärmeübertragene Drucksache nach Anspruch 12, wobei feine Teilchen eines Schmiermittels und/oder einer im wesentlichen transparenten organischen oder anorganischen Substanz ferner in der abtrennbaren Schutzschicht enthalten sind.

14. Wärmeübertragene Drucksache nach Anspruch 12, wobei die Wärmeversiegelungsschicht mindestens eines ausgewählt aus der Gruppe, bestehend aus Vinylchlorid-Vinylacetat Copolymeren, Acryl-Vinylchlorid-Vinylacetat Copolymeren, Acrylharzen und Polyamidharzen, umfaßt.

15. Wärmeübertragene Drucksache nach Anspruch 12, wobei die abtrennbare Schutzschicht mindestens eines, ausgewählt aus der Gruppe, bestehend aus Acrylharzen, modifizierten Celluloseharzen, Silikonharzen und fluorhaltigen Harzen, umfaßt.

16. Bildempfangsmedium nach einem der Ansprüche 1 bis 7, wobei das Bildempfangsmedium die Form einer Karte besitzt.

17. Wärmeübertragene Drucksache nach einem der Anspruch 10 bis 15, wobei das Bildempfangsmedium die Form einer Karte besitzt.

18. Bildempfangsmedium nach einem der Ansprüche 1 bis 7, wobei das Bildempfangsmedium einen Wert des Oberflächenwiderstands von 10⁸ bis 10¹² Ω/cm² aufweist.

## Revendications

1. Milieu recevant une image utilisé en combinaison avec une feuille de transfert thermique, caractérisé en ce que le milieu recevant une image comprend une feuille de résine de poly(chlorure de vinyle) ou un stratifié de plusieurs feuilles de résine de poly(chlorure de vinyle), et au moins une couche dudit milieu recevant l'image placée sur ladite feuille de transfert thermique qui reçoit le colorant provenant de la feuille de transfert thermique et qui comprend une composition de résine de poly(chlorure de vinyle) contenant 0,1 à 10 parties en poids d'un plastifiant par rapport à 100 parties en poids de la résine de poly(chlorure de vinyle).

2. Milieu recevant une image selon la revendication 1, où la couche placée sur ladite feuille de transfert thermique qui reçoit le colorant provenant de la feuille de transfert thermique contient en outre 0,1 à 5 parties en poids d'un lubrifiant par rapport à 100 parties en poids de la résine de poly(chlorure de vinyle).

3. Milieu recevant une image selon la revendication 1 ou 2, où la couche placée sur ladite feuille de transfert thermique qui reçoit le colorant provenant de la feuille de transfert thermique comprend une couche sans pigment.

4. Milieu recevant une image selon l'une quelconque des revendications 1 à 3, où ledit milieu recevant une image comprend un stratifié ayant une structure en trois couches qui a des feuilles supérieures comprenant une composition de poly(chlorure de vinyle) stratifiée sur les deux côtés d'un noyau central comprenant une résine de poly(chlorure de vinyle) rigide.

5. Milieu recevant une image selon l'une quelconque des revendications 1 à 4, où la température de ramollissement de ladite composition de poly(chlorure de vinyle) est comprise dans l'intervalle de 50 à 70°C (suivant la norme JIS-K-6734).

6. Milieu recevant une image selon la revendication 4, qui possède une information imprimée entre ledit noyau central et la feuille supérieure.

7. Milieu recevant une image selon la revendication 4, où ledit noyau centre comprend une résine de poly(chlorure de vinyle) rigide blanche, et ladite feuille supérieure comprend une composition de résine de chlorure de vinyle sensiblement transparente.

8. Procédé de formation d'image de transfert thermique qui est un procédé d'enregistrement d'une image sur un milieu recevant une image en combinant une feuille de transfert thermique avec un milieu recevant une image, caractérisé en ce qu'on réalise l'enregistrement par combinaison d'une manière complexe d'un transfert par sublimation avec une feuille de transfert thermique par sublimation et d'un transfert d'encre par fusion avec une feuille de transfert thermique par fusion avec un milieu recevant une image, qui comprend une feuille de résine de poly(chlorure de vinyle) ou un stratifié de plusieurs feuilles en résine de poly(chlorure de vinyle) et dont au moins une couche du milieu recevant ladite image superposée à ladite feuille de transfert thermique qui reçoit le colorant provenant de la feuille de transfert thermique comprend une composition de résine de poly(chlorure de vinyle) contenant 0,1 à 10 parties en poids d'un plastifiant par rapport à 100 parties en poids de la résine de poly(chlorure de vinyle).

9. Procédé de formation d'image de transfert thermique selon la revendication 8, qui forme des images dégradées de jaune, magenta et cyan par transfert par sublimation à l'aide de ladite feuille de transfert thermique par sublimation, et qui forme une image homogène noire par transfert d'encre par fusion à l'aide de ladite feuille de transfert thermique par fusion.

10. Matériau imprimé par transfert thermique qu'on peut obtenir par enregistrement d'une image sur un milieu recevant une image en combinant une feuille de transfert thermique avec un milieu recevant une image, caractérisé en ce que ladite image comprend une combinaison d'une image qu'on peut obtenir en utilisant une feuille de transfert thermique par sublimation et d'une image qu'on peut obtenir avec une feuille de transfert thermique par fusion, ledit milieu recevant une image comprenant une feuille de résine de poly(chlorure de vinyle) ou un stratifié de plusieurs feuilles de résine de poly(chlorure de vinyle) et au moins une couche dudit milieu recevant une image placée sur ladite feuille de transfert thermique qui reçoit le colorant provenant de la feuille de transfert thermique comprend une composition de résine de poly(chlorure de vinyle) contenant 0,1 à 10 parties en poids d'un plastifiant par rapport à 100 parties en poids de la résine de poly(chlorure de vinyle).

11. Matériau imprimé par transfert thermique selon la revendication 10, où on stratifie en plus une couche protectrice sur la surface d'image imprimée après avoir réalisé la formation de l'image.

12. Matériau imprimé par transfert thermique selon la revendication 11, où ladite couche protectrice comprend une couche thermoscellée comprenant une résine fusible sur ladite surface d'image imprimée par fusion ou ramollissement à la chaleur, et une couche protectrice qu'on peut décoller formée sur la surface de la couche thermoscellée.

13. Matériau imprimé par transfert thermique selon la revendication 12, où des fines particules d'un lubrifiant et/ou d'une substance minérale ou organique sensiblement transparente sont en outre contenues dans ladite couche protectrice qu'on peut décoller.

14. Matériau imprimé par transfert thermique selon la revendication 12, où ladite couche thermoscellée comprend au mains une résine choisie dans le groupe constitué des copolymères chlorure de vinyle-acétate de vinyle, des copolymères acrylique-chlorure de vinyle-acétate de vinyle, des résines acryliques et des résines polyamides.

15. Matériau imprimé par transfert thermique selon la revendication 12, où ladite couche protectrice qu'on peut décoller comprend au moins une résine choisie dans le groupe constitué des résines acryliques, des résines de cellulose modifiées, des résines de silicone et des résines fluorées.

16. Milieu recevant une image selon l'une quelconque des revendications 1 à 7, où le milieu recevant une image est sous forme de carte.

17. Matériau imprimé par transfert thermique selon l'une quelconque des revendications 10 à 15, où le milieu recevant une image est sous forme de carte.

18. Milieu recevant une image selon l'une quelconque des revendications 1 à 7, où le milieu recevant une image a une résistance de surface de 10⁸ à 10¹² W/cm².
